# EUROPEAN PATENT SPECIFICATION

(11) **EP 0 630 557 B1**
(45) Date of publication and mention of the grant of the patent: **19.01.2000**
(21) Application number: 94201789.8
(22) Date of filing: 22.06.1994
(51) Int. Cl.: A01J 7/00

(54) **A construction for automatically milking animals**
Vorrichtung zum automatischen Melken von Tieren
Dispositif de traite automatique d'animaux

(30) Priority: 24.06.1993 NL 9301099
(43) Date of publication of application: 28.12.1994
(60) Divisional application: 99202283.0
(73) Proprietor: MAASLAND N.V., 3155 PD Maasland (NL)
(72) Inventor: van der Lely, Cornelis, CH-6300 Zug (CH)
(74) Representative: Corten, Maurice Jean F.M.

(56) References cited:
- EP-A- 0 091 892
- EP-A- 0 270 165
- EP-A- 0 440 313
- GB-A- 2 218 888

## Description

The present invention relates to a construction for automatically milking animals, such as cows, provided with a milking parlour and a milking robot with a detector for detecting the teats of an animal, which detector is pivotable about at least one vertical shaft and capable of being utilized in at least two compartments.

Such a construction is known from GB - 2 218 888.

In this construction the milking robot rolls on a support rail which is located behind a herringbone milking parlour. The milking robot is further provided with a detector for detecting the teats of an animal. In order to be able to detect the teats of the animal, without that the hind legs of the animal form an obstacle or get hit by the robot arm, the milking robot is provided with a robot arm construction which has two vertical pivot shafts. The disadvantage of this construction is that the animal's hind legs can be hit by the robot arm construction which can result in that the animal kicks against the robot arm construction or the detector as a result of which the milking robot gets damaged.

It is an object of the invention to prevent the above-mentioned disadvantage.

In accordance with the invention, this is achieved in that the pivotable shaft is disposed in an interspace in between the two compartments. Due to the fact that the vertical pivot shaft is arranged in between the two compartments the detector can be moved towards the teats by pivoting the detector around only one pivot axis, while furthermore the pivot axis can be arranged in such a way in between the two compartments that it is prevented that the animal's legs get hit by the robot arm construction. A further advantage of the robot arm construction of the present invention is that when the teats of the animal in the other compartment have to be detected, the detector can very simple be positioned by only pivoting it around the vertical axis, contrary to the state of the art document, no complex positioning movements are necessary with the robot arm construction according to the invention.

According to a feature of the invention, the detector is pivotable through a parallelogram construction. To enable the detector to be moved in the longitudinal direction of the milking parlour, according to another feature of the invention, the parallelogram construction is connected with a frame movable in the longitudinal direction of the milking parlour. According to another feature of the invention, for this purpose the movable frame is disposed in an interspace provided in between the compartments.

In accordance with another feature of the invention, the detector is put into action for the milking in a first compartment and, subsequently, for an activity different from milking in a second compartment situated next to the first one.

According to a further feature of the invention, the construction comprises a unit provided with a device for transmission of ultra-short waves for stimulating the blood flow in the udder and/or teats.

According to a further feature of the invention, the unit is designed as a cleaning unit.

According to still another feature of the invention, the cleaning unit comprises a teat cup. Upon connection of the teat cup to a teat, the teat and a part of the udder can be cleaned by means of the cleaning unit, while the device for transmission of ultra-short waves is, subsequently or simultaneously, put into operation.

According to yet another feature of the invention, the upper part of the teat is grasped by a flexible flange, of which the lower part is in contact with the teat and the upper part is in contact with the underside of the udder. The device for transmission of ultra-short waves is, in accordance with the invention, fitted in the flexible flange. According to a feature of the invention, the flexible flange is provided with radial canals for the purpose.

According to the invention, it is further practicable to provide the construction with a vertically movable massaging device for massaging the animal's udder. According to a further feature of the invention, the massaging device comprises a teat cup or a disc made of a flexible material for the purpose. With the massaging device, the animal's teats and udder are thus also stimulated. According to the invention, a drive including an eccentric may be utilized for the up-and-down motion of the massaging device.

To enable the detector to function as free from interference as practicable, according to a further feature of the invention, the construction comprises one or more shielding sheets to screen off detector rays. In the event that the detector is disposed approximately centrally under the animal and the teat positions are determined by means of the detector, according to a further feature of the invention, the shielding sheets are installed near the rear side of the compartment. According to a further feature of the invention, one shielding sheet constitutes the rear wall of the compartment, while two other shielding sheet members, each provided on a part of the side walls of the compartment, abut on this rear wall. According to a feature of the invention, the part of the side walls covered by the shielding sheets is about 1/5 of the overall length of the milking parlour. To limit diffusion of the signal transmitted by the detector. according to still another feature of the invention, the shielding sheets are provided with a layer absorbing the detector rays. Thus, only the radiation from the object to be measured is received by the detector.

According to another feature of the invention, the construction comprises a separate foremilking device, which functions such that the milk obtained by means of the foremilking device does not come into contact with milk gained for human consumption. Owing to the isolated collection of foremilk, an improvement in quality of milk suitable for human consumption is obtained.

The invention will now be further explained with reference to the accompanying drawings, in which:
Figure 1 is a plan view of a milking parlour comprising two compartments, where a milking robot and a cleaning device are pivotably disposed in between the two compartments;
Figure 2 is a side view of the milking parlour of Figure 1;
Figure 3 is a detailed side view of the cleaning device represented in Figures 1 and 2;
Figure 4 shows the order in which the animals in the compartments of the milking parlour of Figures 1 to 3 are milked and cleaned/massaged, respectively;
Figure 5 is a plan view of a second exemplary embodiment of the invention, showing a milking parlour made up of compartments with, arranged in between the two compartments, a pivotable detector and a pivotable cleaning/massaging device;
Figure 6 is a cross-sectional side view of the cleaning/massaging device taken along the line VI-VI in Figure 5, and
Figure 7 is a plan view of the cleaning/massaging device according to Figure 6.

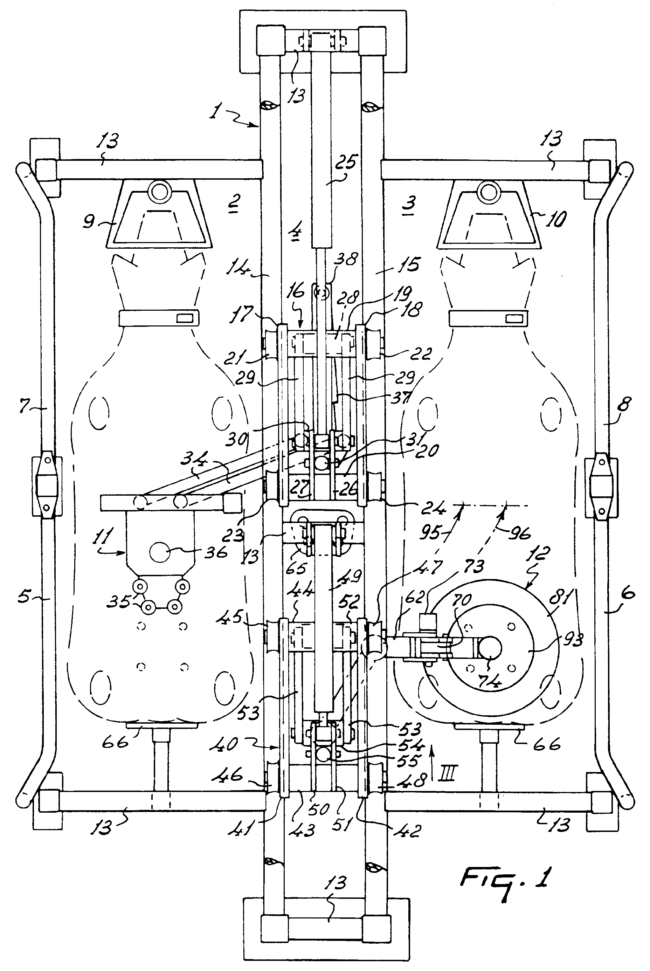

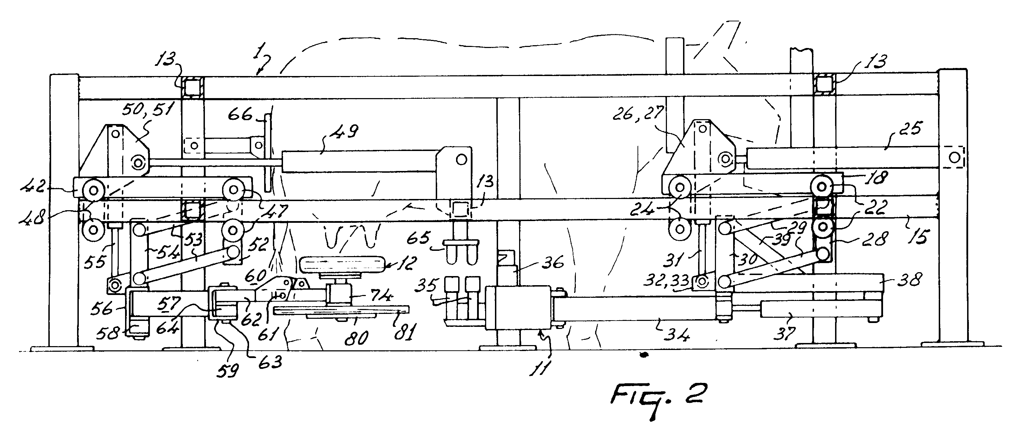

Figure 1 is a plan view of a twin milking parlour 1 comprising two compartments 2 and 3 situated side by side as well as an interspace 4 provided between these two compartments 2 and 3. The animals gain access to the compartments 2 and 3 through doors 5 and 6, respectively, while they are led out of these compartments through doors 7 and 8. In each of the compartments 2 and 3 there is provided an automatic feeding device, the feed troughs 9 and 10 of which are indicated in Figure 1. In a condition of rest, a milking robot 11 and a cleaning/massaging device 12 are in the interspace 4. In the exemplary embodiment shown, the milking robot 11 comprises a chassis 16 movable on two rails 14 and 15 which belong to the enclosure 13 of the two compartments 2 and 3. This chassis 16 is composed of transverse beams 19 and 20 interconnected by means of beams 17 and 18, with these transverse beams on either end being provided with pairs of rollers 21 to 24. Through these pairs of rollers, the chassis 16 can be moved longitudinally on the rails 14 and 15 between the two compartments 2 and 3. This movement is effected by means of an actuating cylinder 25 on one side attached to the front part of the enclosure 13, and, on the other side, fastened in between two plates 26 and 27 mounted at a certain mutual distance on the transverse beam 20. On the transverse beams 19 there are provided beams 28 extending downwards. Supporting beams 30 are connected to the beams 28 by means of a parallelogram link gear 29 operating in an essentially vertical plane. The supporting beams 30 can be moved up and down, parallel to the beams 28, by means of an actuating cylinder 31 disposed in between the plates 26 and 27 fastened to the upper transverse beams 20 and plates 32 and 33 fastened to a beam between the supporting beams 30 (Figure 2). On the lower side of the supporting beams 30 there is provided a robot arm construction 34 equipped with teat cups 35 and a sensor 36 to locate, with reference to the end of the robot arm construction 34 where the teat cups 35 are situated, the teats of an animal present in one of the compartments. The end of the robot arm construction 34 provided with the teat cups 35 is movable horizontally in the way as indicated hereinafter, whereas the robot arm construction 34 is movable vertically by means of the actuating cylinder 31. As is indicated in Figure 1, the robot arm construction 34 comprises a parallelogram link gear 29 which is pivotably connected with the supporting beams 30. Pivoting the parallelogram link gear 29 in a horizontal plane is done by means of an actuating cylinder 37 pivotably connected, on one end, to an arm of this parallelogram link gear 29, and on the other end, to a beam 38 mounted horizontally on the supporting beam 30. For strength, a strut 39 is mounted between the beam 38 and the transverse beams 20. Furthermore, one of the arms of the parallelogram link gear 29 comprises an actuating cylinder - although not depicted - which enables the end of the robot arm construction 34 to be rotated. Owing to the movement of the chassis 16 on the rails 14 and 15, the swivelling movement to be made by means of the parallelogram link gear 29 and the possibility to pivot the end of the robot arm construction 34, the teat cups 35 can be put into any position under the udder of an animal present in one of the compartments 2 or 3. The milking robot 11 has been designed such that the chassis 16 is capable of travelling on the front part of the rails 14 and 15, while further the parallelogram link gear 29 is directed rearwards such that the end of the robot arm construction 34 can swivel to a position between a fore leg and a hind leg, and subsequently be put under the udder of the animal, namely in a position being determined by means of the sensor 36, which is preferably a laser sensor.

As mentioned before, there is installed in the interspace 4 not only the milking robot 11, but also the cleaning/massaging device 12. In the depicted embodiment of the invention, the cleaning/massaging device 12 comprises a chassis 40 movable on the rails 14 and 15. This chassis 40 is made up of transverse beams 43 and 44 connected by means of beams 41 and 42, with the two ends of the transverse beams 43 and 44 being provided with roller pairs 45 - 48. The chassis 40 can be moved longitudinally on the rails 14 and 15 between the two compartments 2 and 3 by means of these roller pairs 45 - 48. This movement is effected by means of an actuating cylinder 49, one end of which, approximately in the centre of the interspace 4, is fastened to a transverse beam included in the enclosure 13 and fitted as such between the rails 14 and 15, and the other end of which is fastened through two plates 50 and 51 fitted at a certain distance from each other on the transverse beam 43. At the centre of the lower transverse beam 44 there are provided, in a rigid connection with the transverse beam 44, beams 52 extending downwards. Supporting beams 54 are connected with the lower ends of the beams 52 by means of a parallelogram link gear 53 acting in an essentially vertical plane. The supporting beams 54 can be moved up and down, parallel to the beams 52, by means of an actuating cylinder 55 mounted between plates 50 and 51 fastened to the upper transverse beam 43. Between the supporting beams 54, at their lower end, there is provided a U-section connecting piece 56, on which a robot arm construction 57 is pivotably mounted. The robot arm construction 57 is rotatable about an essentially vertical axis by means of a motor 58 also disposed on this U-shape connecting piece 56. The robot arm construction 57 is made up of a first part 59 which is connected with the U-shape connecting piece 56 and of a second part 60 which is connected with the end of the first part 59 of the robot arm construction by means of a horizontal pivot 61. On the end of the second part 60 of the robot arm construction, the cleaning/massaging device 12 is fitted. The first part 59 of the robot arm construction is also made up of two parts 62 which are pivotable with respect to each other about a vertical shaft 63. The two parts 62 can be pivoted with respect to each other about the vertical shaft by means of a motor mounted near the vertical shaft 63.

Near the centre of the twin milking parlour 1, a spraying plant 65 for rinsing and disinfecting the teat cups 35 is installed on the enclosure 13,

Furthermore, there are provided, close to the rear side of the compartments 2 and 3, positioning plates 66, by means of which the animal can be longitudinally positioned in the compartments 1 and 2.

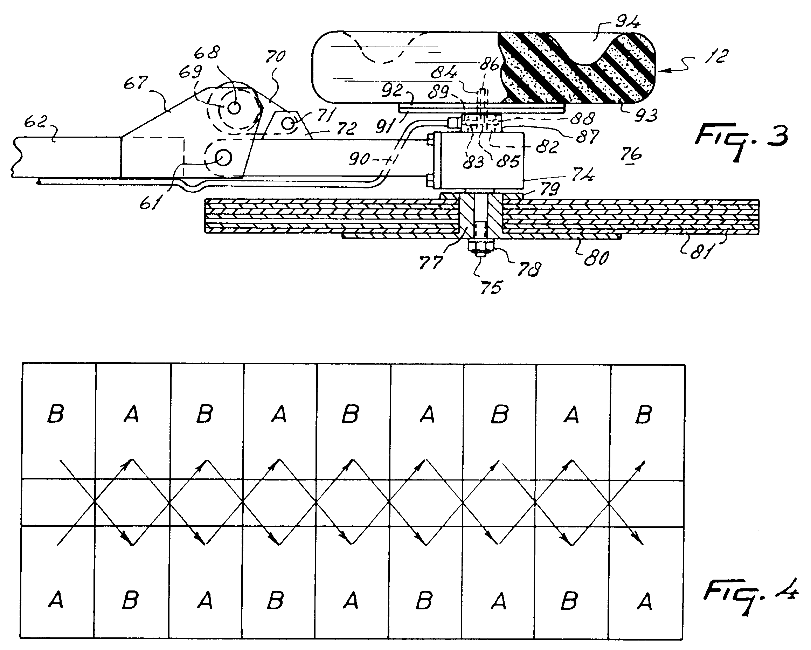

Figure 3 shows enlarged the cleaning/massaging device 12 of Figures 1 and 2. The part 62 belonging to the first part 59 of the robot arm construction 57 comprises, at its end, two lugs 67 bearing the horizontal pivot 61 of the second part 60 of the robot arm construction. Above the horizontal pivot 61, a second horizontal pivot 68, bearing-supported by lugs 67, is provided with an eccentric disc 69. The eccentric disc 69 is bearing-supported by a strip-type connecting member 70, of which one end is pivotably connected with a third horizontal pivot 71 which is connected with the second part 60 of the robot arm construction by means of lugs 72. The second horizontal pivot 68 is driven by a motor 73 which is fitted on the external side of one of the lugs 67. The motor 73 as well as the motors 58 and 64 may be hydraulic, pneumatic or electric ones.

A further drive motor 74, provided with a drive shaft 75 extending vertically, is installed at the end of the second part 60 of the robot arm construction. The drive shaft 75 extends from below the motor 74 to above the motor 74. A cleaning device 76 for cleaning the animal's legs is mounted on the stub of the drive shaft 75 at the lower side of the motor 74. The cleaning device 76 comprises a cylindrical bush 77 pushed over the stub and locked by means of a nut 78 provided on the lower end of the shaft stub. The upper side of the cylindrical bush 77 has a flange 79 of a diameter which roughly corresponds with the diameter of the drive motor 74. The lower side of the cylindrical bush 77 is provided with a flange 80 which has a diameter which is three times that of the first-mentioned flange 79. The flanges 79 and 80 clamp in position a plurality of textile discs 81 radially disposed and stacked. The textile discs 81 have a diameter which is approximately twice that of the lower flange 80. In an alternative embodiment which is not further detailed hereinafter, instead of the textile discs 81, bristles can be radially disposed on the cylindrical bush 77.

On the part of the shaft 75 rising above the motor 73, the cleaning/massaging device 12 is mounted. The shaft stub rising above the motor 73 comprises a first cylindrical part 82 provided with a recess 83 disposed radially in the cylindrical surface and at half the height of this cylindrical part 82. Above the first cylindrical part 82, there is provided a second cylindrical part 84 which has a diameter of about one third that of the first cylindrical part 82. At the height of the recess 83, the first cylindrical part 82 has a horizontal hole 85 which reaches to approximately the centre of the cylindrical part 82 and then connects with a vertical hole 86 provided on the longitudinal axis of the second cylindrical part 84.

Enclosing the first cylindrical part 82 and rigidly mounted on the housing of the drive motor 74 is a cylindrical ring 87 which is also provided with a recess 88 which connects with the recess 83 in the first cylindrical part 82. Furthermore, the cylindrical ring 87 is provided with a horizontal hole 89 which opens into the chamber formed by the recesses 83 and 88. Through a nipple, not shown, a supply line 90 for the supply of spraying and/or disinfecting liquid is connected to the horizontal hole 89. Also mounted on the first cylindrical part 82 is a flat concentric mounting disc 91 which is detachably connected with a further disc 92 slid on the second cylindrical part 84 and rigidly connected with a disc 93 made of foam rubber. The foam rubber disc 93 is about 10 cms thick and it has a diameter of about 40 cms. The first cylindrical part 82, which constitutes a spray nozzle, extends about 3 cms into the foam rubber disc 93. The diameter of the mounting disc 91 and the further disc 92 amounts to about half that of the foam rubber disc 93. The upper side of the foam rubber disc 93 is provided with a hollow surface profile 94 disposed concentrically at about two thirds of the radius, as seen from the centre, of the foam rubber disc 93. The hollow profile 94 is about 8 cms wide and about 4 cms deep. It will be obvious that, apart from foam rubber, any other soft flexible material may be utilized.

During operation, the cleaning/massaging device 12 is put under the udder of an animal by means of the robot arm construction 57. Positioning the cleaning/massaging device 12 will take place on account of data obtained through an animal identification system or on account of data gathered through a sensor. After the foam rubber disc 93 has been put under the udder, the motor 73 is put into operation, whereupon the eccentric disc 69 having a 1 mm eccentricity is driven. Through the strip-type connecting member 70, this causes the second part of the robot arm 60 to move up and down. The dimensions of the second part 60 of the robot arm construction have been chosen such that the massaging disc 93 has a stroke of 10 mms near the centre. During massaging and/or cleaning the udder, the further drive motor 74 is also put into operation. This drive motor 74 is preferably a reversible electric motor which runs at about 40 r.p.m. in operating condition. For an even more profound cleaning and/or massaging effect, in operating condition, it is also practicable to put the motors 58 and 64 into operation, so that the foam rubber disc 93 is also moved in a horizontal plane. During cleaning and/or massaging, a spray and/or disinfection liquid can be applied to the foam rubber disc 93 through the supply line 90.

Furthermore, it is feasible to clean the animal's legs by means of the robot arm construction 57 and the textile discs 81. To this end, the further drive motor 74 drives the textile discs 81, while the textile discs 81 are pressed against a leg of the animal and perform a reciprocating movement therealong by means of the robot arm construction 57. During leg cleaning, the motor 73 can also be energized, causing the textile discs 81 to move vibratingly up and down in the cleaning process. Cleaning the animal's legs in the above manner has the advantage that no udder/teat contamination takes place when the animal lies down to rest and, in doing so, a leg touches the udder and/or teats.

While an animal is being cleaned/massaged with the cleaning/massaging device 12 in one of the two compartments, it is possible at the same time to milk, with the milking robot 11, an other animal in the other compartment. After the milking robot 11 has milked the animal to be milked, the teat cups 35 are disconnected and the milking robot 11 is swung to the other compartment in accordance with the arrows 95 shown in Figure 1. The animal milked subsequently leaves the compartment through the door 7, while another animal is allowed to go through the door 5 and to take its place. The cleaning/massaging device 12 is then swung to the animal to be cleaned and/or massaged, in accordance with the arrow 96 shown in Figure 1. After this animal has also been cleaned and milked, the preceding process repeats itself. In Figure 4 it is indicated how the two compartments are occupied in terms of time and which actions take place in the respective compartments. Here, reference letter A denotes milking and reference letter B denotes cleaning and massaging. When it is taken for granted that the compartments are fully occupied for twenty-four hours and that the herd consists of hundred cows to be milked three times a day, about five minutes are available for each milking session.

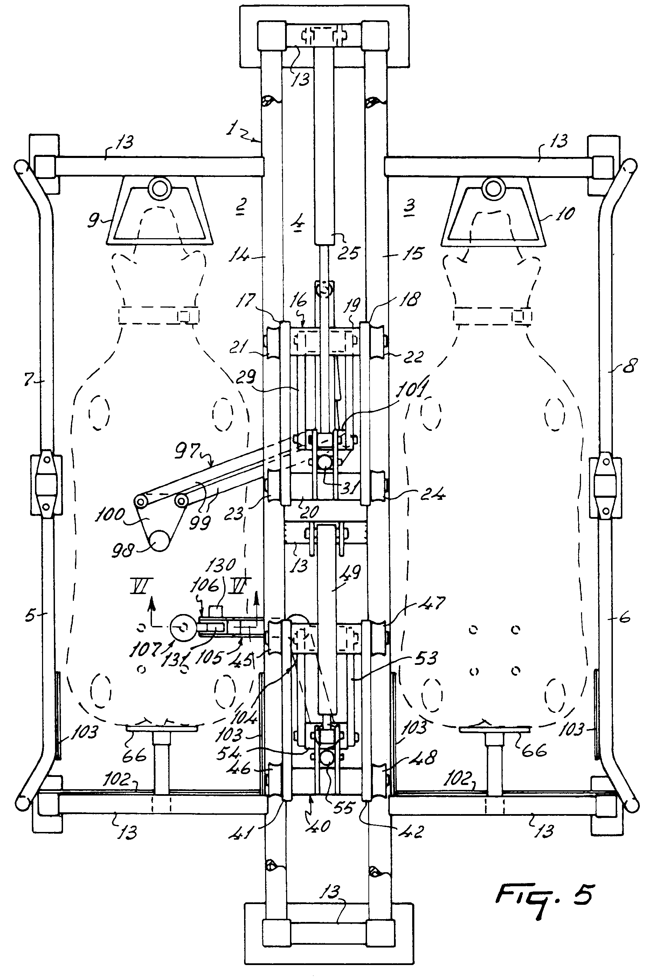

Figure 5 represents a second exemplary embodiment of a twin milking parlour 1 wherein corresponding parts of Figures 1 and 2 are indicated by the same reference numerals. The twin milking parlour 1 shown in Figure 5 comprises a sensor 98 which can be swivelled with a square link gear 97. The square link gear 97 comprises two arms 99 hinged on one end on a carrying platform 100, on which the sensor 98 is placed. The other ends of the arms 99 are hinged on a beam 101 fitted on a chassis - not shown - which is identical to the chassis 16 of the first exemplary embodiment of the construction according to Figures 1 and 2. With this chassis it is possible to move the sensor 98 in the longitudinal direction of the twin milking parlour. With an actuating cylinder - not shown - it is also possible to swing the sensor 98 from one compartment to the other. The sensor 98 may be implemented as a laser sensor, an ultrasonic sensor or any other type of sensor.

In operating condition, the co-ordinates of the teats are determined by means of the sensor 98. For this purpose, the sensor is swung underneath the animal to a position before the udder, and the sensor transmits a signal towards the rear side of the compartment. When this signal hits the teats, it is reflected to a receiving element in the sensor 98. From the signal reflected, the positions of the teats can be derived.

Furthermore, the rear walls of the compartments are covered with shielding elements 102 which prevent that elements out of the compartments affect the detection process. The side walls, too, are provided with shielding elements 103 near the rear side of the compartments. Here, the shielding elements 103 abut on the shielding element 102 which is the rear wall. In the exemplary embodiment shown in Figure 5, the shielding elements 103 of the side walls of the compartments screen off about 1/5 of the overall length of a compartment. In addition, the shielding elements 102 as well as the shielding elements 103 are provided with a layer absorbing sensor rays.

In the twin milking parlour of Figure 5, there is also provided a robot arm construction 104 which partly corresponds with the robot arm construction 57 shown in Figures 1 and 2. In the same way as the robot arm construction 57, the robot arm construction 104 is, by means of a chassis, movable in the longitudinal direction of the twin milking parlour.

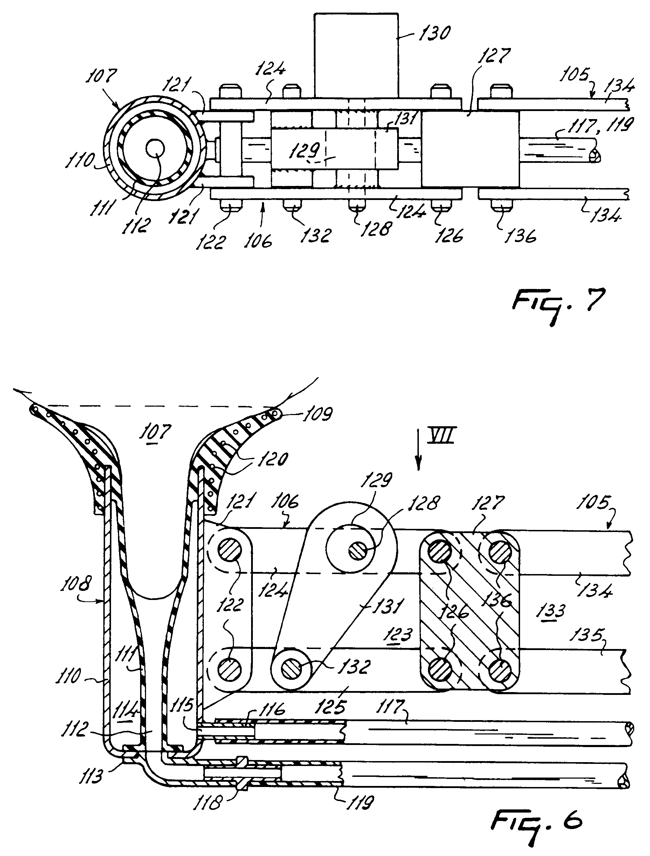

Also the first part 105 of the robot arm construction 104 is identical to the first part 59 of the robot arm construction in Figures 1 and 2. The second part 106 of the robot arm construction 104 is different from the second part 60 of the robot arm construction 57 in Figures 1 and 2, and hereinafter it will be further detailed with reference to Figures 6 and 7.

At the end of the second part 106 of the robot arm construction, there is provided a second exemplary embodiment of a cleaning/massaging device 107, which can also be utilized as a foremilking device. When milk is extracted with the foremilking device 107, it is automatically drained off to a tank - not shown - which, apart from the standard milk tank, is connected to the milk line system. It will be obvious that with the foremilking device 107 it is also possible to milk "normally" teat after teat. In Figure 6 it is shown that this cleaning/massaging device 107 comprises a teat cup 108 which is, on its upper side, provided with a flange 109 made of flexible rubber. The teat cup 108 comprises a cylindrical housing 110 accommodating a teat cup liner 111. Near the upper side of the teat cup 108, the teat cup liner 108 ends in the flexible flange 109, while, at least partly, the flexible flange 109 is firmly clamped round the cylindrical housing by means of an annular flange lip. The teat cup liner 111 projects through a hole 112 provided near the lower side of the cylindrical housing 110. The teat cup liner 111 is fixed in position in the hole 112 by means of a further flange 113. The space between the teat cup liner 111 and the inner wall surface of the cylindrical housing 110 forms a chamber 114, which connects to an air suction and pressure line 117 through a hole 115 provided in the cylindrical housing 110 and through a nipple 116 fitted in this hole. A milk/water line 119 is connected to the lower part of the teat cup liner 111 through a connector 118. By applying water, or a cleaning/disinfection liquid, to the teat cup through this line 119 and by forcing the liquid to flow between a teat and the teat cup liner 111 including the flexible flange, the teat and a part of the udder is cleaned/massaged and, if necessary, disinfected.

The flexible flange 113 is furthermore provided with a plurality of canals 120 disposed radially and accommodating transmitting elements - not shown - for transmission of ultra-short waves. Through these ultra-short waves, the flow of blood in the teat and in at least a part of the udder is stimulated. As shown in Figure 7, in the longitudinal direction of the cylindrical housing 110 there are provided two strips 121 at a certain distance from each other. Pivots 122 provided near the upper end and the lower end of these strips 121 constitute, on one side, the axes of rotation of a parallelogram/link gear 123. The parallelogram/link gear 123 comprises a first pair of arms 124 pivotably connected with the upper pivot 122, and a second pair of arms 125 connected with the lower pivot 122. The other ends of the first and the second pairs of arms 124 and 125 are pivotably connected to a block 127 by means of pivots 126.

A shaft 128 bearing-supported near the centre of the first pair of arms 125 is provided with an eccentric disc 129. The shaft 128 constitutes the drive shaft of an electric motor 130 mounted on one of the arms 124. The (eccentric) disc 129, disposed about 3 mms off the centre of the shaft 128, is bearing-supported in a connecting link 131, whose other end is pivotably connected with a shaft 132 passing through the second pair of arms 125. When the electric motor 130 is energized, the eccentric causes the teat cup 108 to move about 10 mms up and down, which produces a certain massaging/stimulating effect. The block 127 is also connected with a further parallelogram/link gear 133 which also comprises a first pair of arms 134 and a second pair of arms 135. The first and second pair of arms 134 and 135 are pivotably connected to the block 127 by means of shafts 136. The second parallelogram/link gear 133 enables the teat cup 108 to be moved up and down by means of an actuating cylinder - not shown - and consequently, to achieve an adjustment in height.

## Claims

1. A construction for automatically milking animals, such as cows, provided with a milking parlour (1) and a milking robot (11) with a detector (26, 98) for detecting the teats of an animal, which detector (26, 98) is pivotable about at least one vertical shaft and capable of being utilized in at least two compartments (2, 3), characterized in that the pivotable shaft is disposed in an interspace (4) in between the two compartments.

2. A construction according to claim 1, characterized in that the detector (36, 98) is pivotable through a parallelogram construction (34, 97).

3. A construction according to claim 2, characterized in that the parallelogram construction is connected with a frame (16) movable in the longitudinal direction of the milking parlour (1).

4. A construction according to claim 3, characterized in that the movable frame (16) is disposed in an interspace (4) provided in between the compartments (2, 3).

5. A construction according to any one of the preceding claims, characterized in that the detector (36, 98) is put into action for milking in a first compartment (2) and, subsequently, for an activity different from milking in a second compartment (3) situated next to the first one.

6. A construction according to any one of the preceding claims, characterized in that the construction comprises a unit (107) provided with a device for transmission of ultra-short waves for stimulating the blood flow in the udder and/or teats.

7. A construction according to claim 6, characterized in that the unit is designed as a cleaning unit.

8. A construction according to claim 6 or 7, characterized in that the cleaning unit comprises a teat cup (108).

9. A construction according to claim 8, characterized in that the teat cup (108) at the upper side is provided with a flexible flange (109), of which the lower part is in contact with the teat and the upper part is in contact with the underside of the udder.

10. A construction according to claim 9, characterized in that the device for the transmission of ultra-short waves is disposed in the flexible flange (109).

11. A construction according to any one of the preceding claims, characterized in that the construction comprises a vertically movable massaging device (107, 12) for massaging the animal's udder.

12. A construction according to any one of the preceding claims, characterized in that the construction comprises one or more shielding sheets (102, 103) to screen off detector rays.

13. A construction according to claim 12, characterized in that the shielding sheets (102, 103) are installed near the rear side of the compartment (2, 3).

14. A construction according claim 13, characterized in that one shielding sheet (102) constitutes the rear wall of the compartment (2, 3), while two other shielding sheet members (103), each provided on a part of the side walls of the compartment (2, 3), abut on this rear wall.

15. A construction according to claim 14, characterized in that the shielding sheets (103) on the side walls cover about 1/5 of the overall length of the milking parlour (1).

16. A construction according to claim 13 to 15, characterized in that the shielding sheets (102, 103) are provided with a layer absorbing the detector rays.

17. A construction according to any one of the preceding claims, characterized in that the construction comprises a separate foremilking device (107), which functions such that the milk obtained by means of the foremilking device does not come into contact with milk obtained for human consumption.

## Patentansprüche

1. Vorrichtung zum automatischen Melken von Tieren, wie z. B. Kühen, die einen Melkstand (1) und einen Melkroboter (11) mit einem Detektor (36, 98) zum Ermitteln der Zitzen eines Tieres aufweist, wobei der Detektor (36, 98) um mindestens eine vertikale Achse schwenkbar und in mindestens zwei Boxen (2, 3) einsetzbar ist,
dadurch gekennzeichnet, daß die Schwenkachse in einem Zwischenraum (4) zwischen den beiden Boxen angeordnet ist.

2. Vorrichtung nach Anspruch 1,
dadurch gekennzeichnet, daß der Detektor (36, 98) mittels einer Parallelogrammführung (34, 97) schwenkbar ist.

3. Vorrichtung nach Anspruch 2,
dadurch gekennzeichnet, daß die Parallelogrammführung mit einem Rahmen (16) verbunden ist, der in Längsrichtung des Melkstandes (1) bewegbar ist.

4. Vorrichtung nach Anspruch 3,
dadurch gekennzeichnet, daß der bewegbare Rahmen (16) in einem Zwischenraum (4) zwischen den Boxen (2, 3) angeordnet ist.

5. Vorrichtung nach einem der vorhergehenden Ansprüche,
dadurch gekennzeichnet, daß der Detektor (36, 98) zum Melken in einer ersten Box (2) und anschließend für eine andere Tätigkeit als dem Melken in einer neben der ersten Box angeordneten zweiten Box (3) aktiviert wird.

6. Vorrichtung nach einem der vorhergehenden Ansprüche,
dadurch gekennzeichnet, daß die Vorrichtung eine Einheit (107) aufweist, die mit einer Vorrichtung zur Übertragung von Ultrakurzwellen zur Anregung der Durchblutung des Euters und/oder der Zitzen versehen ist.

7. Vorrichtung nach Anspruch 6,
dadurch gekennzeichnet, daß die Einheit als Reinigungseinheit ausgeführt ist.

8. Vorrichtung nach Anspruch 6 oder 7,
dadurch gekennzeichnet, daß die Reinigungseinheit einen Zitzenbecher (108) umfaßt.

9. Vorrichtung nach Anspruch 8,
dadurch gekennzeichnet, daß der Zitzenbecher (108) am oberen Ende einen elastischen Flansch (109) aufweist, dessen unterer Teil in Kontakt mit der Zitze und dessen oberer Teil in Kontakt mit der Unterseite des Euters steht.

10. Vorrichtung nach Anspruch 9,
dadurch gekennzeichnet, daß die Vorrichtung zur Übertragung von Ultrakurzwellen im elastischen Flansch (109) angeordnet ist.

11. Vorrichtung nach einem der vorhergehenden Ansprüche,
dadurch gekennzeichnet, daß die Vorrichtung eine in vertikaler Richtung bewegbare Massagevorrichtung (107, 12) zum Massieren des Euters des Tieres aufweist.

12. Vorrichtung nach einem der vorhergehenden Ansprüche,
dadurch gekennzeichnet, daß die Vorrichtung eine oder mehrere Abschirmplatten (102, 103) zur Abschirmung von Detektorstrahlen aufweist.

13. Vorrichtung nach Anspruch 12,
dadurch gekennzeichnet, daß die Abschirmplatten (102, 103) nahe der Rückseite der Box (2, 3) eingebaut sind.

14. Vorrichtung nach Anspruch 13,
dadurch gekennzeichnet, daß eine Abschirmplatte (102) die Rückwand der Box (2, 3) bildet, während zwei andere Abschirmplatten-Teilstücke (103), die jeweils an einem Teil der Seitenwände der Box (2, 3) angebracht sind, an dieser Rückwand anstoßen.

15. Vorrichtung nach Anspruch 14,
dadurch gekennzeichnet, daß die Abschirmplatten (103) an den Seitenwänden etwa 1/5 der Gesamtlänge des Melkstandes (1) bedecken.

16. Vorrichtung nach Anspruch 13 bis 15,
dadurch gekennzeichnet, daß die Abschirmplatten (102, 103) mit einer die Detektorstrahlen absorbierenden Beschichtung versehen sind.

17. Vorrichtung nach einem der vorhergehenden Ansprüche,
dadurch gekennzeichnet, daß die Vorrichtung eine separate Vormelkvorrichtung (107) aufweist, die derart arbeitet, daß die mittels der Vormelkvorrichtung gewonnene Milch nicht mit Milch für den menschlichen Verzehr in Kontakt kommt.

## Revendications

1. Installation destinée à la traite automatique d'animaux, tels que vaches, munie d'un box de traite (1) et d'un robot de traite (11) ayant un détecteur (26, 98) pour détecter les trayons d'un animal, lequel détecteur (26, 98) peut pivoter autour d'au moins un arbre vertical et peut être utilisé dans au moins deux compartiments (2, 3), caractérisée en ce que l'arbre de pivotement est disposé dans un espace intermédiaire (4) situé entre les deux compartiments.

2. Installation selon la revendication 1, caractérisée en ce que le détecteur (36, 98) peut pivoter par l'intermédiaire d'une installation en parallélogramme (34, 97).

3. Installation selon la revendication 2, caractérisée en ce que la installation en parallélogramme est reliée à un châssis (16) mobile dans la direction longitudinale du box de traite (1).

4. Installation selon la revendication 3, caractérisée en ce que le châssis mobile (16) est disposé dans un espace intermédiaire (4) agencé entre les compartiments (2, 3).

5. Installation selon l'une quelconque des revendications précédentes, caractérisée en ce que le détecteur (36, 98) est mis en action, pour la traite, dans un premier compartiment (2) et par la suite, pour une activité différente de la traite, dans un second compartiment (3) situé à proximité du premier.

6. Installation selon l'une quelconque des revendications précédentes, caractérisée en ce que la installation comporte une unité (107) munie d'un dispositif destiné à la transmission d'ondes ultracourtes destinées à stimuler l'écoulement sanguin dans le pis et/ou les trayons.

7. Installation selon la revendication 6, caractérisée en ce que l'unité est conçue sous forme d'une unité de nettoyage.

8. Installation selon la revendication 6 ou 7, caractérisée en ce que l'unité de nettoyage comporte un gobelet trayeur (108).

9. Installation selon la revendication 8, caractérisée en ce que le gobelet trayeur (108) est muni au niveau du côté supérieur d'un rebord souple (109) dont la partie inférieure est en contact avec le trayon et la partie supérieure est en contact avec le côté inférieur du pis.

10. Installation selon la revendication 9, caractérisée en ce que le dispositif destiné à la transmission d'ondes ultracourtes est disposé dans le rebord souple (109).

11. Installation selon l'une quelconque des revendications précédentes, caractérisée en ce que la installation comporte un dispositif de massage verticalement mobile (107, 12) pour masser le pis de l'animal.

12. Installation selon l'une quelconque des revendications précédentes, caractérisée en ce que la installation comporte une ou plusieurs feuilles de blindage (102, 103) pour éliminer les rayons du détecteur.

13. Installation selon la revendication 12, caractérisée en ce que les feuilles de blindage (102, 103) sont installées à proximité du côté arrière du compartiment (2, 3).

14. Installation selon la revendication 13, caractérisée en ce que la première feuille de blindage (102) constitue la paroi arrière du compartiment (2, 3), alors que deux autres éléments formant feuille de blindage (103) agencés chacun sur une partie des parois latérales du compartiment (2, 3), viennent en butée sur cette paroi arrière.

15. Installation selon la revendication 14, caractérisée en ce que les feuilles de blindage (103) situées sur les parois latérales recouvrent environ 1/5 de la longueur totale du box de traite (1).

16. Installation selon l'une quelconque des revendications 13 à 15, caractérisée en ce que les feuilles de blindage (102, 103) sont munies d'une couche absorbant les rayons du détecteur.

17. Installation selon l'une quelconque des revendications précédentes, caractérisée en ce que la installation comporte un dispositif séparé pour le premier lait fourni (107), qui agit de telle sorte que le lait obtenu par l'intermédiaire du dispositif pour premier lait fourni ne vient pas en contact avec le lait obtenu pour la consommation humaine.
